# EUROPÄISCHE PATENTSCHRIFT

(11) **EP 0 937 996 B1**
(45) Veröffentlichungstag und Bekanntmachung des Hinweises auf die Patenterteilung: **11.06.2003**
(21) Anmeldenummer: 99102667.5
(22) Anmeldetag: 12.02.1999
(51) Int. Cl.: G01S 17/08, G01S 7/483

(54) **Lichtlaufzeitzähler mit Korrekturschaltung**
Transit-time of light counter with correcting circuit
Compteur du délai de propagation de lumière avec un circuit de correction

(30) Priorität: 18.02.1998 DE 19806741
(43) Veröffentlichungstag der Anmeldung: 25.08.1999
(73) Patentinhaber: Schmersal-EOT GmbH & Co. KG, 79108 Freiburg (DE)
(72) Erfinder: Jakob, Hermann, 79297 Winden (DE); Ruh, Willi, 79117 Freiburg (DE)
(74) Vertreter: Sparing - Röhl - Henseler Patentanwälte

(56) Entgegenhaltungen:
- DE-A- 4 333 113
- DE-A- 4 340 756

## Beschreibung

Die Erfindung betrifft einen Lichtlaufzeitzähler mit Korrekturschaltung nach dem Oberbegriff des Anspruchs 1.

Es ist bekannt, Lichtlaufzeitzähler zur Entfernungsbestimmung von Objekten einzusetzen. Die Messung der Laufzeit eines an einem Objekt reflektierten Lichtimpulses liefert infolge der konstanten Ausbreitungsgeschwindigkeit des Lichts von c₀= 3 x 10⁸ m/s ein direktes Maß für die Objektentfernung. Aufgrund der Signaldynamik des Empfangssignals muß der Meßwert des Zählers in Abhängigkeit von der Amplitude des Empfangssignals korrigiert werden, um akzeptable Entfernungsauflösungen zu erhalten.

Aus der DE-A-43 40 756 ist eine Ausführung einer Korrekturschaltung in Verbindung mit einem Zähler zur Messung der Lichtlaufzeit beschrieben. Für Applikationen in der Sicherheitstechnik ist für höhere Sicherheitslevel eine zweikanalige Auswertung vorgeschrieben, die jedoch hierdurch nicht erfüllt wird. Die Korrekturschaltung ist für eine diskrete Amplitudenbestimmung ausgelegt, so daß ein Entfernungsmeßfehler, der von der Amplitude des empfangenen Lichtimpulses abhängt, berücksichtigbar ist. Infolge der diskreten Amplitudenbestimmung ist jedoch mittels einer solchen Korrekturschaltung nur eine relativ geringe Genauigkeit erreichbar.

Aufgabe der Erfindung ist es, einen Lichtlaufzeitzähler nach dem Oberbegriff des Anspruchs 1 zu schaffen, der eine große Meßgenauigkeit aufweist.

Diese Aufgabe wird entsprechend dem kennzeichnenden Teil des Anspruchs 1 gelöst.

Hierzu umfaßt ein Lichtlaufzeitzähler zwei synchrone oder asynchrone Zähler mit entgegengesetzter Zählrichtung, deren Zählerstand getrennt einlesbar und verarbeitbar ist. Durch die zur Erhöhung der Auflösung dienende Zweiphasenauswertung wird nicht nur gleichzeitig eine analoge (kontinuierliche) Korrektur des Meßwerts ermöglicht, sondern auch eine für einen höheren Sicherheitslevel erforderliche Zweikanaligkeit erreicht. Eine mit dem Lichtlaufzeitzähler verbundene Korrekturschaltung ist für eine kontinuierliche Amplitudenbestimmung ausgelegt.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt ein Blockschaltbild eines Lichtlaufzeitzählers.
Fig. 2 zeigt ein Blockschaltbild einer Korrekturschaltung.
Fig. 3 veranschaulicht das Auftreten von Zeitmeßfehlern anhand von zwei Signalen unterschiedlicher Amplitude.

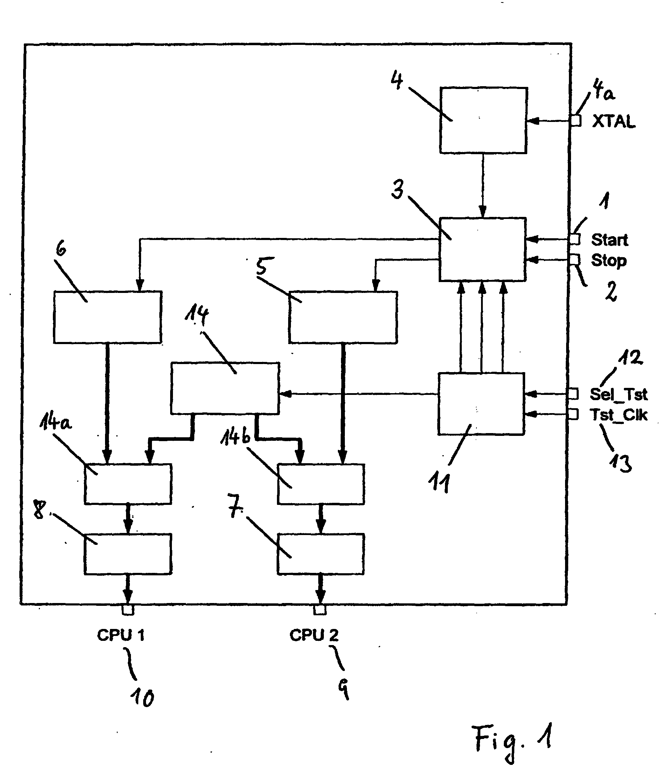

Gemäß Fig. 1 weist ein Lichtlaufzeitzähler einen "Start"-Eingang 1 und einen "Stopp"-Eingang 2 auf, die mit einer Start-Stop-Logik 3 verbunden sind. Sobald ein Startsignal am "Start"-Eingang 1 eintrifft, etwa bei Aussendung eines Lichtimpulses durch eine Vorrichtung zur Entfernungsmessung, beginnt der Lichtlaufzeitzähler zu zählen. Sobald der Lichtlaufzeitzähler über einen "Stopp"- Eingang 2 ein Stoppsignal erhält, etwa bei Empfang eines Lichtpulses durch eine Vorrichtung zur Entfernungsmessung nach Reflexion des Lichtpulses an einem Objekt, hört er auf zu zählen. Eine für den Lichtlaufzeitzähler benötigte Taktfrequenz wird über einen spannungsgesteuerten Oszillator 4 (VCO= "voltage controlled oscillator") realisiert und über die Ausgangsleitungen der Start-Stop-Logik 3 bei Auftreten eines Startsignals freigegeben. Dabei ist eine Steuerspannung des VCO über einen phasen-starren Schaltkreis (PLL= "phase-locked loop") erzeugbar. Ein Referenztakt ist dem PLL von einem externen Quarz über einen XTAL-Eingang 4a zuführbar.

Der Lichtlaufzeitzähler umfaßt weiter einen Aufwärtszähler 5 und einen Abwärtszähler 6, die mit den Ausgängen der Sta-Stop-Logik 3 verbunden sind und über die die zur Erhöhung der Auflösung notwendige Zweiphasenauswertung und die für die Anforderungen der Sicherheitstechnik notwendige Zweikanaligkeit reaisiert werden. Der Aufwärts- und der Abwärtszähler 5, 6 werden jeweils über einen Tristate-Ausgangstreiber 7 bzw. 8 an einen Datenbus eines Mikrocontrollers 9 bzw. 10 angeschlossen. Infolgedessen sind Zählerstände des Aufwärtszählers 5 und des Abwärtszählers 6 von den Mikrocontrollern 9, 10 separat einles- und verarbeitbar. Die beiden Mikrocontroller 9, 10 tauschen die Zählerstände des Aufwärtszählers 5 und des Abwärtszählers 6 aus und addieren sie. Die Zählerstände des Aufwärtszählers 5 und des Abwärtszählers 6 dürfen sich bei der Messung um maximal + 1 bit niedrigster Wertigkeit (LSB= "least significant bit") unterscheiden. Ein Überlauf des Aufwärtszählers 5 und des Abwärtszählers 6 wird durch ein bit höchster Wertigkeit (MSB= "most significant bit") nachgewiesen, woraufhin Aufwärtszähler 5 und Abwärtszähler 6 gestoppt werden.

Infolge des von den Mikrocontrollern 9, 10 vorgenommenen Austauschs und der Addition der Zählerstände des Aufwärtszählers 5 und des Abwärtszählers 6 ist eine Verdopplung der Meßauflösung durch die Zweiphasenauswertung erreichbar.

Der Lichtlaufzeitzähler umfaßt ferner eine Testlogik 11, die über ein Sel_Tst-Signal 12 aktivierbar ist. Die Testlogik 11 ist außerdem zum Empfang eines Tst_Clk-Signal 13 ausgelegt, über das unterschiedliche Tests des Lichtlaufzeitzählers abrufbar sind. Mittels der Testlogik 11 sind während des Tests auftretende dynamische Fehler (die im Zusammenhang mit bestimmten Ereignissen, etwa bei Kurzschluß zwischen zwei Datenleitungen auftreten) nachweisbar. Zum Nachweis statischer Fehler (vor allem "stuck at 0"- und "stuck at 1"-Fehler) des Lichtlaufzeitzählers 1 ist ein Schieberegister 14 in diesen integriert. Das Schieberegister 14 ist wie die Zähler 5, 6 über Multiplexer 14a, 14b ebenfalls über die Tristate-Ausgangstreiber 7 bzw. 8 an den Datenbus des Mikrocontrollers 9 bzw. 10 angeschlossen, wobei eine entsprechende Bitverschiebung im Schieberegister 14 bei Aktivierung durch ein Sel_Tst-Signal 12 zur Überprüfung auf einen statischen Fehler ausgewertet wird.

Infolge der Nachweisbarkeit statischer und dynamischer Fehler des Lichtlaufzeitzählers werden die entsprechenden Anforderungen der Sicherheitstechnik erfüllt.

Der beschriebene Aufbau des Lichtlaufzeitzählers hat den Vorteil, daß Anforderungen der Funktionalität (Zweiphasenauswertung) und Anforderungen der Sicherheitstechnik (Zweikanaligkeit) gleichermaßen erfüllbar sind. Hierbei muß nicht für jeden Auswertekanal ein separater Zählerbaustein verwendet werden, wodurch eine kostengünstigere Realisierung ermöglicht wird. Infolge des zweikanaligen Aufbaus ist der Lichtlaufzeitzähler für die Anforderungen höherer Sicherheitskategorien geeignet.

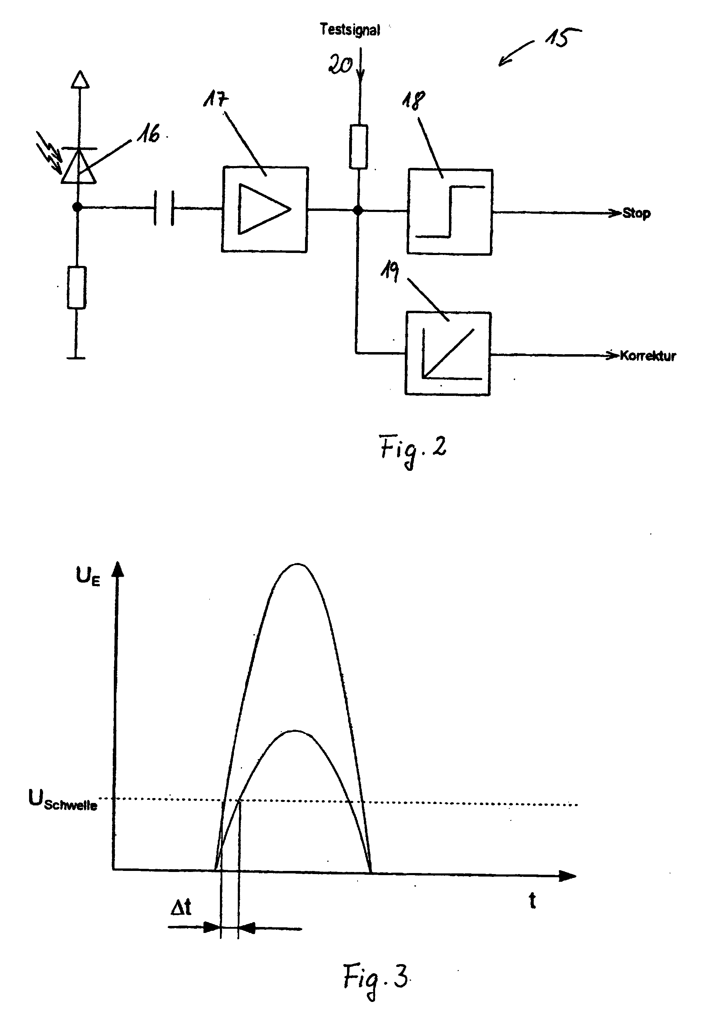

Gemäß Fig. 2 umfaßt eine Korrekturschaltung 15 ein Empfangselement 16 für einen Lichtimpuls sowie einen an das Empfangselement 16 angeschlossenen Verstärker 17. Mit dem Verstärker 17 ist ein Komparator 18 mit fest eingestellter Schwelle verbunden. Ein durch den Verstärker 17 verstärktes Signal wird auf den Komparator 18 geführt, wo bei Überschreitung einer Schwellenspannung durch die Amplitude des Empfangssignals ein Stopp-Ereignis für den Lichtlaufzeitzähler ausgelöst wird.

Die Korrekturschaltung 15 umfaßt weiter einen Integrator 19 zur Integration des durch das Empfangselement 16 erhaltenen Lichtimpulses. Bei fester Pulsbreite ist die Fläche unter einem Puls im UE-t-Diagramm (d.h. in der Auftragung der Spannung des Empfangssignals gegen die Zeit) proportional zur Amplitude des Signals. Die Integration des Lichtimpulses ergibt daher einen zur Amplitude des Lichtimpulses proportionalen Wert.

Gemäß Fig. 3 nimmt bei Lichtimpulsen mit konstanter Impulsbreite die Steigung der ansteigenden Flanke (ebenso wie die der absteigenden) mit wachsender Amplitude des Signals zu. Bei fester Schwelle des Komparators 18 wird daher diese für ein Signal niedrigerer Amplitude erst zu einem späteren Zeitpunkt erreicht. Dies führt zu einem Meßfehler, mit dem eine Messung durch den Lichtlaufzeitzähler behaftet ist und der von der Amplitude des jeweils empfangenen Lichtimpulses abhängt. Infolge der durch den Integrator 19 der Korrekturschaltung 15 durchführbaren Integration des jeweiligen Lichtimpulses ist dieser Meßfehler berücksichtigbar.

Aufgrund einer solchen Korrektur mittels eines kontinuierlichen Korrektursignals ist gegenüber einer diskreten Amplitudenbestimmung eine größere Korrekturgenauigkeit erreichbar.

Über ein Testsignal 20 ist ein Teststrom in die Korrekturschaltung 15 einspeisbar. Mittels des Teststroms ist die Funktionsfähigkeit des Integrators 19 überprüfbar.

Infolge der Überprüfbarkeit der Funktionsfähigkeit des Integrators 19 werden die entsprechenden Anforderungen für einen Einsatz in der Sicherheitstechnik erfüllt.

## Patentansprüche

1. Lichtlaufzeitzähler mit Korrekturschaltung (15), der bei Aussendung eines Lichtimpulses über einen "Start"-Eingang (2) startbar und bei Empfang eines Lichtimpulses über einen "Stopp"-Eingang (3) stoppbar ist und mittels einer Korrekturschaltung (15) ein von der Amplitude eines empfangenen Lichtimpulses abhängender Meßfehler berücksichtigbar ist, **dadurch gekennzeichnet, daß** zwei Zähler (5, 6) vorgesehen sind, deren Zählrichtung entgegengesetzt ausgelegt und deren Zählerstand getrennt einlesbar und verarbeitbar ist, und die Korrekturschaltung (15) für eine kontinuierliche Bestimmung der Amplitude des empfangenen Lichtimpulses ausgelegt ist.

2. Lichtlaufzeitzähler nach Anspruch 1, **dadurch gekennzeichnet, daß** ein Schieberegister (14) zum Nachweis statischer Fehler der beiden asynchronen Zähler (5, 6) vorgesehen ist.

3. Lichtlaufzeitzähler nach Anspruch 1 oder 2, **dadurch gekennzeichnet, daß** eine Testlogik (11) zum Nachweis dynamischer Fehler der beiden asynchronen Zähler (5, 6) vorgesehen ist.

4. Lichtlaufzeitzähler nach einem der Ansprüche 1 bis 3, **dadurch gekennzeichnet, daß** die Korrekturschaltung (15) einen Integrator (19) zur Integration des empfangenen Lichtimpulses umfaßt.

5. Lichtlaufzeitzähler nach Anspruch 4, **dadurch gekennzeichnet, daß** die Funktion des Integrators (19) mittels eines einspeisbaren Teststromes (20) überprüfbar ist.

## Claims

1. Light transit time counter with a correction circuit (15) which on sending a light pulse can be started through a "Start" input (2) and on receiving a light pulse can be stopped through a "Stop" input (3), allowance being made through a correction circuit (15) for a measuring error depending on the amplitude of the received light pulse, **characterised in that** two counters (5, 6) are provided, the counting direction of which is opposite and the count of which can be read in and processed separately, and the correction circuit (15) is laid out for continuously determining the amplitude of the received light pulse.

2. Light transit time counter according to Claim 1, **characterised in that** a shift register (14) is provided to prove static errors of the two asynchronous counters (5, 6).

3. Light transit time counter according to Claim 1 or 2, **characterised in that** test logic (11) is provided for proving dynamic errors of the two asynchronous counters (5, 6).

4. Light transit time counter according to one of the Claims 1 to 3, **characterised in that** the correction circuit (15) comprises an integrator (19) for integrating the received light pulse.

5. Light transit time counter according to Claim 4, **characterised in that** the function of the integrator (19) can be tested by means of a test current (20) which can be fed-in.

## Revendications

1. Compteur de temps de parcours de la lumière avec circuit de correction (15), qui, lors de l'émission d'une impulsion lumineuse, peut démarrer par l'intermédiaire d'une entrée « départ » (2) et lors de la réception d'une impulsion lumineuse peut être arrêtée par l'intermédiaire d'une entrée « arrêt » (3) et au moyen d'un circuit de correction (15) par lequel une erreur de mesure dépendant de l'amplitude d'une impulsion lumineuse reçue peut être prise en compte, **caractérisé en ce que** deux compteurs (5, 6) sont prévus, dont le sens de comptage est conçu de manière opposée et dont la position du compteur peut être lue et traitée séparément, et le circuit de correction (15) est conçu pour une détermination continue de l'amplitude de l'impulsion lumineuse reçue.

2. Compteur de temps de parcours de la lumière selon la revendication 1, **caractérisé en ce qu'**un registre à décalage (14) est prévu pour détecter des erreurs statiques des deux compteurs asynchrones (5, 6).

3. Compteur de temps de parcours de la lumière selon la revendication 1 ou 2, **caractérisé en ce qu'**une logique d'essai (11) est prévue pour détecter des erreurs dynamiques des deux compteurs asynchrones (5, 6).

4. Compteur de temps de parcours de la lumière selon l'une des revendications 1 à 3, **caractérisé en ce que** le circuit de correction (15) comprend un intégrateur pour l'intégration des impulsions de lumière reçues.

5. Compteur de temps de parcours de la lumière selon la revendication 4, **caractérisé en ce que** le fonctionnement de l'intégrateur (19) peut être vérifié par l'envoi d'un courant d'essai (20).
